# EUROPEAN PATENT SPECIFICATION

(11) **EP 2 646 136 B1**
(45) Date of publication and mention of the grant of the patent: **22.12.2021**
(21) Application number: 11845940.3
(22) Date of filing: 28.11.2011
(51) Int. Cl.: B01D 69/00, B01D 61/02, B01D 71/06

(54) **FORWARD OSMOSIS HOLLOW FIBER MEMBRANE**
HOHLFASER-VORWÄRTSOSMOSEMEMBRAN
MEMBRANE À FIBRES CREUSES D'OSMOSE DIRECTE

(30) Priority: 29.11.2010 US 417758 P
(43) Date of publication of application: 09.10.2013
(73) Proprietor: Nanyang Technological University, Singapore 639798 (SG)
(72) Inventor: WANG, Rong, Singapore 637722 (SG); SETIAWAN, Laurentia, Singapore 637722 (SG); FANE, Anthony G., Singapore 637722 (SG)
(74) Representative: Viering, Jentschura & Partner mbB Patent- und Rechtsanwälte
(86) International application number: PCT/SG2011/000418
(87) International publication number: WO 2012/074487

(56) References cited:
- WO-A2-03/013708
- WO-A2-2010/111755
- WO-A2-2010/111755
- JP-A- 2001 120 968
- US-A1- 2010 181 253
- US-A1- 2010 181 253
- BA C ET AL: "Chemical modification of P84 copolyimide membranes by polyethylenimine for nanofiltration", JOURNAL OF MEMBRANE SCIENCE, ELSEVIER, vol. 327, no. 1-2, 5 February 2009 (2009-02-05), pages 49-58, XP025917497, ISSN: 0376-7388, DOI: 10.1016/J.MEMSCI.2008.10.051 [retrieved on 2008-11-08]
- TEOH M M ET AL: "Exploring Torlon/P84 co-polyamide-imide blended hollow fibers and their chemical cross-linking modifications for pervaporation dehydration of isopropanol", SEPARATION AND PURIFICATION TECHNOLOGY, ELSEVIER SCIENCE, AMSTERDAM, NL, vol. 61, no. 3, 15 July 2008 (2008-07-15), pages 404-413, XP022689180, ISSN: 1383-5866, DOI: 10.1016/J.SEPPUR.2007.12.002 [retrieved on 2008-01-18]
- None
- Sun Shi Peng ET AL: "Polyamide-imide nanofiltration hollow fiber membranes with elongation-induced nano-pore evolution", AIChE Journal, vol. 56, no. 6, 1 June 2010 (2010-06-01), pages 1481-1494, XP055812833, US ISSN: 0001-1541, DOI: 10.1002/aic.12083

## Description

### Technical Field

The present disclosure relates to a method of forming a nanofiltration hollow fiber membrane, and in particular, a poly(amide-imide) hollow fiber membrane, which is suitable for use in forward osmosis applications.

### Background

Forward osmosis (FO) process is a natural phenomenon, which can be defined as the net movement of water molecules across a semi-permeable membrane from a less concentrated solution to a more concentrated solution. FO process utilizes an osmotic pressure gradient instead of hydraulic pressure or temperature as a driving force, thus it has the potential to produce water with less energy consumption and is well suited for a wide range of potential applications, including wastewater treatment, water purification, seawater desalination, as well as power generation.

However, the main drawback of FO system is the permeate flux decline due to internal concentration polarization in the dense substrate when conventional reverse osmosis (RO) membranes were used.

As an alternative option, nanofiltration (NF) membranes have been explored for use in FO process due to their properties of 'loose' RO and high rejections to multivalent salts. For instance, it has been reported that polybenzimidazole (PBI) NF hollow fiber membranes with a desirable mean pore size can be used for FO process. Under FO tests using 1M MgCl₂ as the draw solution, these membranes showed water flux of 4 and 6 L/m².h for the configurations of active layer facing feed water (AL-facing-FW) and active layer facing draw solution (AL-facing-DS), respectively. PBI, however, has poor mechanical strength for fabrication of self-standing membranes.

In another example, cellulose acetate NF hollow fiber membrane was fabricated and explored for its FO application. The membrane exhibited water flux in the range of 2.7 to 7.3 L/m².h with 0.5 to 2.0 M MgCl₂ draw solutions for the AL-facing-DS orientation and 1.8 to 5.0 L/m².h with the same draw solutions for the AL-facing-FW orientation. Hydrophilic polymers such as cellulose and its derivatives exhibit good properties as membrane materials in desalination applications. However, these polymers are very sensitive to thermal, chemical and biological degradation. Hydrolysis of this type of materials occurs very rapidly in alkaline conditions. The separation process using cellulose-based membranes must therefore be carried out at an optimum pH of 4 to 6.5 at ambient temperature.

Ba C. et al. disclose chemical modification of P84 copolyimide membranes by polyethylenimine for use in nanofiltration.

Teoh M. M. et al. disclose chemical modification of composite hollow fibers for pervaporation dehydration of isopropanol, wherein the composite hollow fibers are made of a polyamide-imide polymer. The polyamide-imide hollow fibers are modified by cross-linking using *p*-xylenediamine.

WO 2010/111755 A2 discloses methods for preparing cross-linked polyimide membranes. The methods include contacting a ready-made polyimide membrane with a solution containing a primary or secondary di-, tri- or polyamine to form the cross-linked polyimide membrane.

US 2010/181253 A1 discloses a method of improving the solvent-resistance of a polyimide membrane to a solvent present in a mixture to be filtered. The method involves cross-linking of the polyimide membrane using an amino compound.

### Summary

Various embodiments provide for a poly(amide-imide) (PAI) hollow fiber membrane with improved properties and performance.

According to a first aspect, there is provided a method for forming a nanofiltration hollow fiber membrane comprising a PAI hollow fiber substrate having a lumen and a polyethyleneimine (PEI)-cross-linked PAI skin layer formed on a shell side, wherein the PAI hollow fiber substrate is made of asymmetric microporous hollow fibers made of PAI material, the method comprising contacting the PAI hollow fiber substrate with an aqueous solution of PEI at a temperature of between 50°C and 80°C for a period of between 1 and 180 min to cross-link PAI in the skin layer of the PAI hollow fiber substrate by PEI after sealing both ends of the PAI hollow fiber substrate, wherein concentration of the aqueous PEI solution ranges from between 0.2 to 5 wt%.

According to another aspect, there is provided a nanofiltration hollow fiber membrane obtained by the method disclosed in the first aspect.

### Brief Description of the Drawings

In the drawings, like reference characters generally refer to the same parts throughout the different views. The drawings are not necessarily drawn to scale, emphasis instead generally being placed upon illustrating the principles of various embodiments. In the following description, various embodiments of the present disclosure are described with reference to the following drawings.
**Figure** 1 shows the cross-section morphology of PAI hollow fiber substrates of Example 1 at (a)(i) 30X and (a)(ii) 200X, Example 2 at (b)(i) 30X and (b)(ii) 200X, and Example 3 at (c)(i) 30X and (c)(ii) 200X.
**Figure 2** shows salt rejections of Example 1 membranes immersed in various concentrations of PEI solution at 70°C for 120 min.
**Figure 3** shows the effect of post-treatment time on filtration performance of treated Example 1 membrane (test conditions: 1.0 bar, room temperature and 500ppm salt aqueous solution; post-treatment conditions: 70°C and 1 wt% PEI solution).
**Figure 4** shows the cross-section morphology of Example 1 PAI hollow fiber after post treatment: (a) enlarged at 30X; (b) enlarged at 200X; Outer surface morphology of Example 1 PAI hollow fiber: (c) after post treatment, enlarged at 20KX; (d) before post treatment, enlarged at 20KX. (Post-treatment condition: 1 wt% PEI solution at 70°C for 2h).
**Figure 5** shows ATR-FTIR spectra of the Example 1 substrate before post-treatment (top) and after post treatment (bottom). The inset is the spectra in the wave number region of 1520-1670 cm⁻¹. (Post-treatment conditions: 1 wt% PEI solution at 70°C for 2h).
**Figure 6** shows the reaction scheme between (a) poly(amide-imide) (PAI) and (b) polyethyleneimine (PEI); (c) cross-linked PAI.
**Figure 7** shows zeta potential of Example 1 hollow fiber membrane before and after post-treatment (*post-treatment conditions: 1 wt% PEI solution at 70°C for 2h).
**Figure 8** shows the rejection behaviors of treated Example 1 membrane to various salts (test conditions: 1.0 bar, room temperature and 500ppm salt aqueous solution; post-treatment conditions: 1 wt% PEI solution at 70°C).
**Figure 9(a)**, **(b)** show FO experimental results of (i) water flux and (ii) *Js*/*Jv* in two configurations (**▲** AL-facing-DS; ■ AL-facing-FW) for the membranes of Example 2 and 3, respectively.
**Figure 10** shows an illustration of effective osmotic pressure difference in a positively charged FO membrane (a) AL-facing-FW; (b) AL-facing DS.

### Description

The following detailed description refers to the accompanying drawings that show, by way of illustration, how specific details and embodiments disclosed herein may be practised. These embodiments are described in sufficient detail to enable those skilled in the art to practise the subject matters disclosed herein. The various embodiments are not necessarily mutually exclusive, as some embodiments can be combined with one or more other embodiments to form new embodiments.

Various embodiments of the present disclosure provide a poly(amide-imide) (PAI) hollow fiber membrane.

Hollow fiber membranes have large lumen with an inner diameter of more than 1mm. A larger lumen of the membrane is favorable to the fluid flow inside the lumen with less resistance. Further, hollow fiber membranes are suitable for FO processes because they are self-supported and possess a flow pattern necessary for FO process. Additionally, it is much simpler to fabricate a hollow fiber module with a high packing density. Accordingly, the present disclosure offers a simple fabrication process, a tailorable membrane structure and a promising membrane performance in the AL-facing-FW configuration for FO applications.

PAIs are thermoplastic amorphous polymers possessing a positive synergy of properties from both polyamides and polyimides and thus have exceptional mechanical, thermal and chemical resistant properties. PAI presents a good chemical stability at a wide pH range and a high resistance to many organic solvents because of its ability to form intra- and inter-chain hydrogen bonding. In addition, PAI can be utilized in hollow fiber membrane fabrication using non-solvent induced phase separation (NIPS) technique. PAIs are mainly produced by Solvay Advanced Polymers under the trademark Torlon (Torlon^{®}). There are three types of Torlon^{®} PAI materials that can be used in membrane fabrication: Torlon 4000T-LV (low viscosity), MV (medium viscosity), and HV (high viscosity). In one embodiment, Torlon 4000T-MV is used in the present disclosure. Torlon^{®} PAI powders are suitable for use in other high performance forms. For example, these powders are soluble in dipolar aprotic solvents such as N-methyl pyrrolidone (NMP), dimethylacetamide (DMAC), dimethylsulfoxide (DMSO) and dimethylformamide (DMF). Solutions of these systems are spun into fibers to form hollow fiber membrane substrates.

Hollow fiber spinning technique is well established in the art and has been reported in detailed by Shi et al. (J Membrane Sci. 305 (2007) 215-225), for example. Briefly, the dope was dispensed under pressure through a spinneret at a controlled rate, and went through an air gap before immersing into a coagulation bath. Tap water was used as external coagulant while the mixtures of Milli-Q Water and NMP with different ratios were used as the bore fluid. The nascent hollow fiber was taken up by a roller at a certain velocity and stored in a water bath to remove residual solvent for at least 2 days. A post-treatment was performed to alleviate the membrane substrate shrinkage and pores collapse during drying process at ambient condition. The membrane substrate was immersed into a water/glycerol mixture for 24 h. This process allowed the glycerol to replace water gradually in the membrane substrate pores. The membrane substrates were subsequently dried at room temperature prior to the characterization tests and further applications. The glycerol inside the membrane substrate pores can act as the pore supporter to alleviate the collapse of pores during membrane substrate drying process.

In various embodiments, the nanofiltration hollow fiber membrane includes a PAI hollow fiber substrate having a polyethyleneimine (PEI)-cross-linked PAI surface layer. The PAI-PEI cross-linked selective layer is supported on the PAI hollow fiber substrate which provides the mechanical strength to the resultant hollow fiber membrane. Asymmetric microporous hollow fibers made of Torlon^{®} PAI material are used as the porous substrate. The present disclosure has utilized the unique feature of PAI, i.e. the imide group in PAI interacts with polyethyleneimine by forming cross-linking to form a positively charged diamine on the membrane surface. The PAI-PEI cross-linked selective layer is NF-like, i.e. the nominal pore size of the PAI-PEI cross-linked selective layer is in the nanometer range, such as about 0.5 to about 2 nm, similar to pore sizes of nanofiltration membranes.

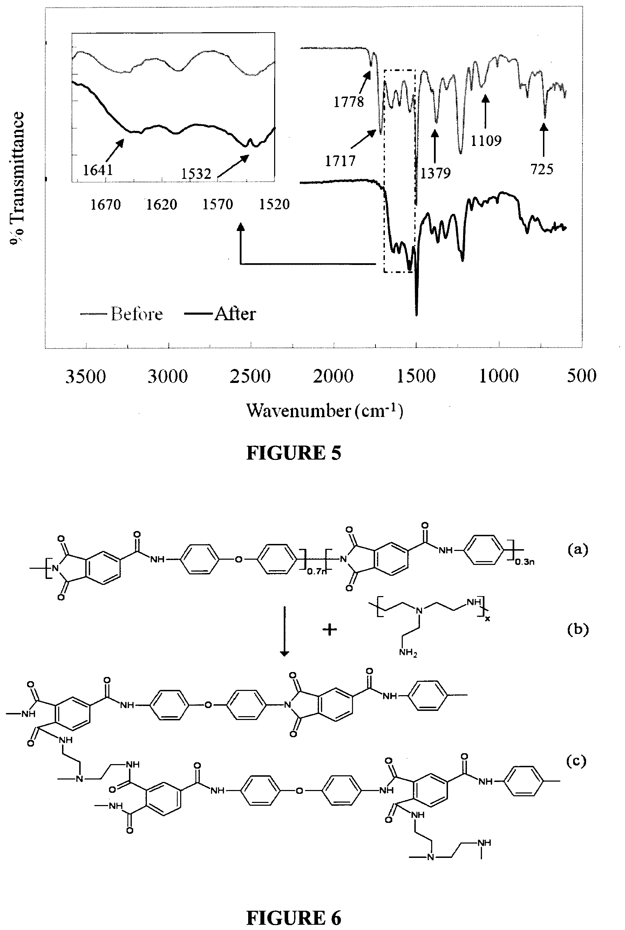

**Figure 6** shows in one embodiment (a) a poly(amide-imide) (PAI), (b) polyethyleneimine (PEI), and (c) the cross-linked PAI-PEI.

The hollow fiber membrane is formed by contacting the hollow fiber substrate with an aqueous solution of PEI under conditions suitable for cross-linking PAI in the surface layer of the PAI hollow fiber substrate by PEI.

In various embodiments, the hollow fiber substrate is immersed in the aqueous PEI solution. Alternatively, the aqueous solution of PEI is circulated around the hollow fiber substrate by using a pump. In one embodiment, PEI ethylenediamine end-capped was used to perform the chemical post-treatment of the hollow fiber substrate. For example, about 500mL of PEI aqueous solution may be used.

The concentration of the aqueous PEI solution ranges from between 0.2 to 5 wt%. For example, the concentration of the aqueous PEI solution may be about 1 wt%.

The hollow fiber substrate is contacted with the aqueous PEI solution at a temperature of between 50°C and 80°C for the cross-linking reaction between the PAI hollow fiber substrate and PEI to occur. For example, the reaction temperature may be about 70°C.

The hollow fiber substrate is contacted with the aqueous PEI solution for a period of between 1 and 180 min, such as about 120 min.

As mentioned above, the hollow fiber substrates may be formed by spinning technique. In one embodiment, the hollow fiber substrate is formed by dry-jet wet spinning. The dry-jet wet spinning includes dispensing a polymer dope solution and a bore fluid through a spinneret into a coagulation bath and removing the spun hollow fiber substrate from the coagulation bath.

In certain embodiments, the polymer dope solution includes poly(amide-imide) dissolved in a solvent selected from the group consisting of N-methyl-2-pyrrolidone (NMP), dimethylacetamide (DMAc), dimethylsulfoxide (DMSO) and dimethylformamide (DMF).

Additionally, the polymer dope solution may further include additives such as a pore former. Any pore formers are suitable so long as they can dissolve in the respective solvents for PAI. For example, suitable pore formers include, but are not limited to, organic pore formers such as PEG, polyvinylpyrrolidone (PVP), pluronic, alcohol (methanol, ethanol, iso-propanol, glycerol), and ethylene glycol, inorganic salt pore formers such as lithium chloride (LiCl), LiBr, KClO₄, or water. In one embodiment, the pore former may be LiCl.

In various embodiments, the bore fluid may be water or a mixture of NMP and water.

In order that the present disclosure may be readily understood and put into practical effect, particular embodiments will now be described by way of the following non-limiting examples.

### Examples

### Experiments and Methods

### Materials

Torlon^{®} 4000T (copolymer of amide and imide) (PAI), supplied by Solvay Advanced Polymers (Alpharetta GA), was used to make porous hollow fiber substrates. N-Methyl-2-pyrrolidone (NMP, > 99.5%, CAS#872-50-4, Merck Chemicals, Singapore) and lithium chloride (LiCl, anhydrous, CAS#7447-41-8, MP Biomed) were used as a solvent and pore former, respectively. Purified water by a Milli-Q system (18MΩcm) was used as the internal coagulant. Dextrans with different molecular weights (from 6,000 to 500,000 Da, (C₆H₁₀O₅)ₙ, CAS#9004-54-0, Sigma) were used to characterize the molecular weight cut off (MWCO) of hollow fiber membranes. Polyethyleneimine (PEI) ethylenediamine end-capped (Sigma Aldrich) was used to perform chemical post-treatment of the hollow fiber substrate. For filtration experiments, sodium chloride (NaCl, ≥ 99%), magnesium chloride (MgCl₂, hexahydrate), sodium sulfate (Na₂SO₄, anhydrous), magnesium sulfate (MgSO₄, heptahydrate) were purchased from Merck. All the reagents were used as received.

### General Scheme for Fabricating Hollow Fiber Membrane Substrate

PAI was dried in a 50°C vacuum oven for at least 12 h to remove moisture prior to the preparation of dope solutions. The polymer was then dissolved into NMP in a jacket flask equipped with a mechanical stirrer in a temperature of about 60 °C for 3 days. Once the polymer was dissolved completely, a desired amount of LiCl was added and stirred until homogeneous solution can be attained, followed by filtering and degassing prior to spinning.

Hollow fiber spinning technique is well established in the art and has been reported in detailed by Shi et al. (J Membrane Sci. 305 (2007) 215-225), for example. Briefly, the dope was dispensed under pressure through a spinneret at a controlled rate, and went through an air gap before immersing into a coagulation bath. Tap water was used as external coagulant while the mixtures of Milli-Q Water and NMP with different ratios were used as the bore fluid. The nascent hollow fiber was taken up by a roller at a certain velocity and stored in a water bath to remove residual solvent for at least 2 days. A post-treatment was performed to alleviate the membrane substrate shrinkage and pores collapse during drying process at ambient condition. The membrane substrate was immersed into a water/glycerol mixture for 24 h. This process allowed the glycerol to replace water gradually in the membrane substrate pores. The membrane substrates were subsequently dried at room temperature prior to the characterization tests and further applications. The glycerol inside the membrane substrate pores can act as the pore supporter to alleviate the collapse of pores during membrane substrate drying process.

In the following examples, the hollow fiber membrane substrates were prepared using PAI dissolved in NMP or DMAc solvent. The concentrations of the polymer range from about 12 to about 25 wt.%. Water, LiCl or poly(ethylene glycol) (PEG) with a concentration ranging from about 1 to about 10 wt.% is adopted as a non-solvent additive in the dope solution. A mixture of NMP and water of certain weight ratios of between about 0/100 and about 50/50 is adopted as the bore fluid.

The temperature of the spinneret is controlled at between about 15 °C and about 40 °C. An air gap of about 0.2 cm to about 20 cm is used. The hollow fiber membrane substrate preferably has an outer diameter of about 800 µm to about 2000 µm, more preferably about 1000 µm to about 1500 µm, and an inner diameter of about 500 µm to about 1300 µm, more preferably about 800 µm to about 1200 µm.

### General Scheme for Forming A Dense Skin Layer of the Hollow Fiber Membrane

The formation of a NF-like skin layer on the outer surface of the PAI hollow fiber membrane substrate was made based on chemical cross-linking reaction, which was conducted by immersing the hollow fiber membrane substrate into a 500 mL of PEI aqueous solution at temperature of about 50 °C to about 80 °C. The reaction time was varied from about 0 to about 180 min and the PEI concentration was varied from about 0.2 % to about 5 % (wt/wt). Next, the membranes were rinsed using purified water and stored for characterization.

### Example 1

PAI hollow fiber membrane substrates (ST#1) were made of a polymer dope solution consisting of 20 wt.% PAI in NMP. The dope extrusion rate was 6 g/min, while the bore fluid composition used was purely water (i.e. NMP and water ratio is 0/100 vol.%) with a flow rate of 4 ml/min. Tap water with room temperature around 23 °C was used as the coagulant. The air gap used was 5 cm. The details of dry-jet wet spinning conditions are listed in **Table 1.**

After spinning, the hollow fiber membrane substrate was immersed in a 500 mL of PEI aqueous solution at temperature of 70 °C. The reaction time was 120 min and the PEI concentration was 1 % (wt/wt). Next, the membranes were rinsed using purified water and stored for characterization.

### Example 2

PAI hollow fiber membrane substrates (ST#2) were made of a polymer dope solution consisting of 15 wt.% PAI in NMP with 2 wt.% LiCl. The dope extrusion rate was 6 g/min, while the bore fluid composition used was a mixture of NMP and water (25/75 vol.%) with a flow rate of 8 ml/min. Tap water with room temperature around 23 °C was used as the coagulant. The air gap used was 5 cm. The details of dry-jet wet spinning conditions are listed in **Table 1**. The chemical cross-linking conditions are the same as those used in Example 1.

### Example 3

PAI hollow fiber membrane substrates (ST#3) were made of a polymer dope solution consisting of 15 wt.% PAI in NMP with 3 wt.% LiCl. The dope extrusion rate was 6 g/min, while the bore fluid composition used was a mixture of NMP and water (25/75 vol.%) with a flow rate of 8 ml/min. Tap water with room temperature around 23 °C was used as the coagulant. The air gap used was 5 cm. The details of dry-jet wet spinning conditions are listed in **Table 1**. The chemical cross-linking conditions are the same as those used in Example 1.

**Table 1. Spinning conditions and parameters used in Examples 1, 2, and 3**

| **Parameters** | **ST#1** | **ST#2** | **ST#3** |
|---|---|---|---|
| Dope composition (PAI/LiCl/NMP) (wt.%) | 20/0/80 | 15/2/83 | 15/3/82 |
| Dope flow rate (g min⁻¹) | 6.0 | 6.0 | 6.0 |
| Bore fluid (NMP/H₂O) (vol.%) | 0/100 | 25/75 | 25/75 |
| Bore fluid flow rate (mL min⁻¹) | 4.0 | 8.0 | 8.0 |
| Air gap (cm) | 5.0 | 5.0 | 5.0 |
| Take up speed | free fall | free fall | free fall |
| External coagulant | tap water | tap water | tap water |
| Spinning temperature (°C) | 23 | 23 | 23 |
| Spinneret diameter (mm) | 1.50 | 1.50 | 1.50 |
| ID of bore fluid needle (mm) | 0.70 | 0.70 | 0.70 |

### Characterization of PAI Hollow Fiber Membrane Substrates

The structure and morphology of the resultant membranes were examined by a Zeiss EVO 50 SEM. The average overall porosity of the membrane was determined by gravimetric method which measures the weight of isopropyl alcohol as the wetting solvent contained in membrane pores. Tensile strength test of the hollow fiber membranes was performed using a Zwick 0.5kN Universal Testing Machine at room temperature. To perform pure water permeability (PWP) and molecular weight cut-off (MWCO) measurement, two hollow fiber modules were made. Every module consisted of four fibers with an effective length of 25 cm. Compaction was carried out at 1 bar for 2h prior to measurement. DI water was circulated through the shell and lumen side of the membrane module at 1 bar to get PWP. MWCO of PAI hollow fiber substrate was determined by the filtration method using a 2000 ppm dextran solution and analyzed by gel permeation chromatography (GPC) on a Polymer Laboratories-GPC 50 plus system (double PL aquagel-OHMixed-M 8µ columns). The dextran solution was made by a mixture of several different molecular weights from 6,000 Da to 500,000 Da.

### Membrane Surface Charge

Membrane surface charge (zeta potential) was observed based on the streaming potential measurement by using a SurPASS electrokinetic analyzer (Anton Paar GmbH, Austria). An electrolyte solution of 10 mM potassium chloride (KCl, Merck, Singapore) solution was circulated through a cylindrical measuring cell containing the membrane sample. The streaming potential was detected by Ag/AgCl electrodes located at both ends of the sample. Automatic titration was performed using a 0.1 M hydrochloric acid (HCl, Qrec) solution and a 0.1 M sodium hydroxide (NaOH, Merck, Singapore) solution to investigate the effect of pH on membrane surface charge. The Fairbrother-Mastin approach was used to determine the zeta potential of the membrane.

### Confirmation of the Chemical Reaction in the Post-Treatment

The chemical reaction occurring in the post-treatment was confirmed by a fourier transformed infra red spectrometer (FTIR, Perkin Elmer, Spectrum 2000) using the attenuated total reflection (ATR) with ZnSe crystal method. The hollow fiber membranes were dried in a vacuum oven overnight before the analysis.

### PWP and Salt Rejection

Four pieces of hollow fibers were potted into a tube (effective length of 25 cm) and sealed by epoxy. The performance of PWP and salt rejection of chemically modified PAI hollow fibers was tested in a bench scale cross-flow filtration unit. The hydraulic pressure up to 1.5 bar was applied on the shell side of hollow fiber membrane module to obtain water permeability coefficient (A) using DI water. The salt rejection experiment was carried out using a 500 ppm salt solution based on conductivity measurements (Ultrameter II, Myron L Company, Carlsbad, CA) of permeate and feed water.

### Performance in FO Process

The same modules used for PWP and salt rejection measurements were used for FO experiment. Two-variable-speed gear pumps were used to supply feed (purified water) and draw solutions (MgCl₂, etc.), respectively. The volumetric flow rates of the shell side and lumen side were 1500 mL/min and 450 mL/min, respectively, to ensure a similar Reynolds number (around 2600) of the liquid flowing both in the module shell and fiber lumen. FO experiments were performed in two configurations: active layer facing draw solution (AL-facing-DS) and active layer facing feed water (AL-facing-FW). The draw solution either flowed in the shell side of the module (AL-facing-DS) or in the lumen of the hollow fibers (AL-facing-FW). The volumetric water flux, *Jv*, was determined at a certain time interval by measuring the weight changes of the feed tank with a digital mass balance connected to a data logging system. The FO test was conducted at room temperature of 23 °C.

### Results and Discussion

### Morphology and Property of PAI Hollow Fiber Membrane Substrates

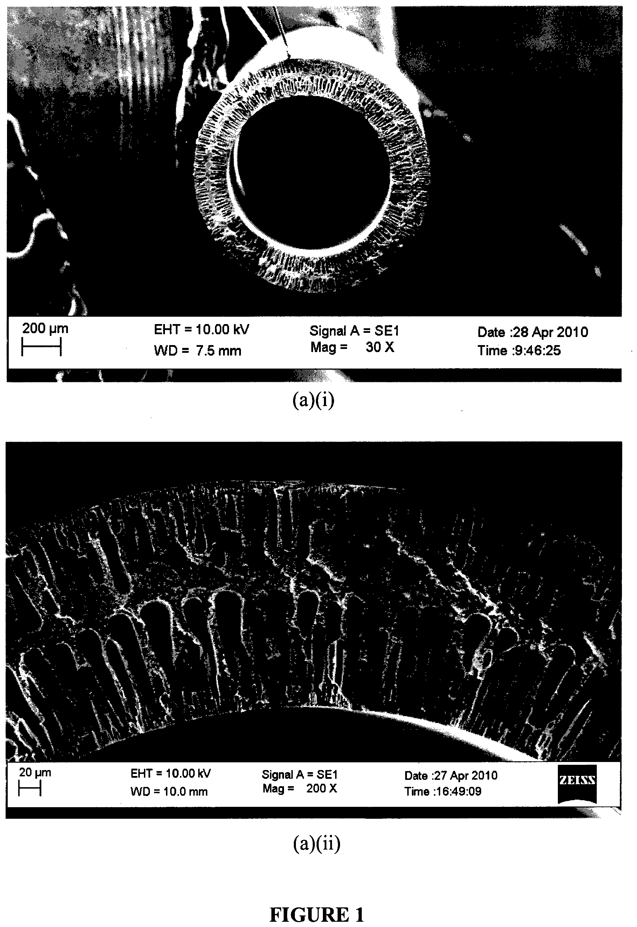

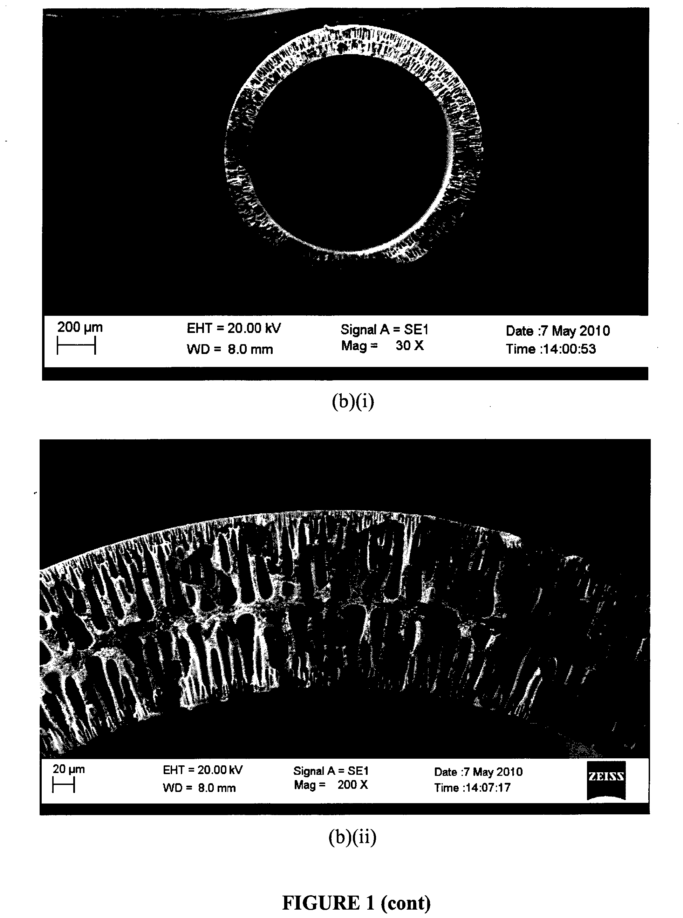

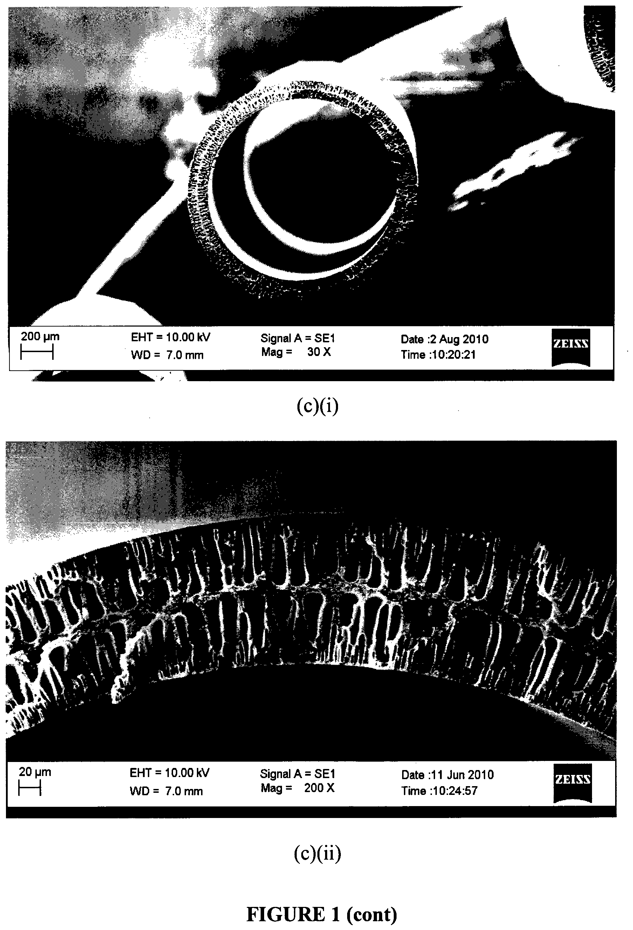

**Figure 1** shows the cross-section morphologies of SEM for three PAI hollow fiber membrane substrates (ST#1, ST#2, and ST#3) prepared by a variation of dope composition and spinning parameter, as indicated in **Table 1.** It can be seen that these substrates exhibited similar cross-section morphologies in which the finger-like structures were developed simultaneously beneath the inner and outer surfaces without forming large macro-voids. However, the ST#1 hollow fiber substrate presented the thickest sponge-like structure in the middle of the cross-section, followed by the ST#2 and ST#3 hollow fiber substrates, as shown in Figure 1(a)(ii), (b)(ii) and (c)(ii). Moreover, the difference in wall thickness of the fibers can be easily observed. The thinner walls for the ST#2 and ST#3 substrates are mainly attributed to the higher flow rate of the bore fluid used (for ST#2 and ST#3) during the membrane fabrication. A thinner substrate and less sponge-like structure are favorable to the FO process, which will be discussed in later paragraphs.

The properties of the PAI hollow fiber membrane substrates in terms of dimension, PWP, MWCO and porosity are listed in **Table 2**.

**Table 2. Properties of PAI Hollow Fiber Membrane Substrates of Example 1, 2, and 3**

| **Properties** | **ST#1** | **ST#2** | **ST#3** |
|---|---|---|---|
| Fiber ID/OD (mm/mm) | 0.87/1.27 | 1.19/1.50 | 1.17/1.45 |
| Fiber wall thickness (µm) | 835 | 155 | 140 |
| -2 -1 -1 PWP (L m⁻²h⁻¹bar⁻¹) | 27 | 122 | 134 |
| Outer skin MWCO (KDa)^{∗} | 20 | 23 | < 6 |
| Inner skin MWCO (KDa)⁺ | 37 | 44 | 24 |
| Porosity (%) | 51 | 70 | 85 |

| | | | |
|---|---|---|---|
| ^{∗}dextran filtration was performed from the shell side ⁺dextran filtration was performed from the lumen of the fiber | | | |

From **Table 2**, the ST#2 and ST#3 hollow fiber membrane substrates possessed quite large dimensions (ID/OD around 1.2/1.5 mm/mm) in comparison with conventional NF hollow fibers. A larger fiber lumen is favorable to the fluid flow inside the lumen with less resistance based on the Hagen-Poiseuille's law.

From **Table 2,** it can also be seen that the ST#1 has the lowest PWP compared to ST#2 and ST#3 substrates as the polymer concentration in the original dope composition decreased from 20% to 15%, leading to increased membrane porosity. It seems that ST#3 hollow fiber substrate possessed an excellent pore structure, which is indicated by the low MWCO (<6 KDa, dextran filtration was performed from the shell side), high pure water flux (134 L/m².h.bar) and high porosity (85%). The MWCO experiment was repeated to confirm the correctness of the measurement. The possible reason responsible for the low MWCO may be linked to the dope composition of ST#3 substrate (PAI/LiCl/NMP: 15/3/82). Since the concentration of the additive is high (higher than ST#2), the thermodynamic stability of the initial dope composition was reduced, so instantaneous demixing might take place in the phase inversion process, resulting in a denser surface but a more porous support. These properties are believed to be relevant to the subsequent chemical post-treatment and FO application.

**Table 3** shows the mechanical properties (tensile modulus, tensile stress at break and tensile strain) of the PAI hollow fiber substrates along with the counterparts of polyethersulfone (PES) hollow fiber membranes reported previously. The PAI hollow fibers possessed tensile modulus of 151 MPa to 239 MPa, which is much higher than that of PES hollow fibers (57.5 MPa to 138.9 MPa). A high tensile modulus suggests a high rigidity of the membrane. While the tensile stress and strain at break measured for the PAI hollow fibers can reach as high as 6.4 MPa to 12.2 MPa and 26% to 50%, respectively, the combination of high tensile stress and strain at break allows the membrane to have a high toughness.

**Table 3. Mechanical Properties of PAI Hollow Fiber Membrane Substrates of Example 1, 2, and 3**

| **Sample** | **Tensile Modulus (MPa)** | **Stress at break (MPa)** | **Strain at break (%)** |
|---|---|---|---|
| ST#1 | 239 ± 16 | 9.8 ± 0.5 | 42 ± 4 |
| ST#2 | 224 ± 7 | 12.2 ± 1.1 | 50 ± 7 |
| ST#3 | 151 ± 4 | 6.4 ± 0.2 | 26 ± 4 |
| PES^{a} | 81.9 ― 88.4 | 4.1 ― 5.4 | 34.0 ― 58.6 |
| PES^{b} | 57.5 ― 104.0 | 0.9 ― 1.7 | 9.9 ― 16.9 |
| PES^{c} | 107.0 ― 138.9 | 2.8 ― 3.4 | 29.5 ― 43.8 |

| | | | |
|---|---|---|---|
| ^{a}Wang et al., J Membrane Science, 355 (2010) 158-167 ^{b}Chung et al., Chemical Engineering Science, 55 (2000) 1077-1091 ^{c}Qin et al., J Membrane Science, 157 (1999) 35-51 | | | |

### Optimal Conditions for Chemical Post-treatment

The optimal post-treatment temperature was determined by varying the temperature from 60°C to 80°C using the ST#1 hollow fiber as the model substrate while the PEI concentration was fixed at 1% and the post treatment time was controlled at 2h. The temperature effect on the PWP and salt rejections of the modified membrane can be observed from **Table 4**. Before the post treatment, the original membrane had the PWP of 26.7 L/m².h.bar and the rejection of 11.9% to MgCl₂. As the temperature of post-treatment increased, the PWP decreased to 1.8 L/m².h.bar while the salt rejection to MgCl₂ increased to 94% at 70°C due to more surface pores being sealed as a result of cross-linking reaction between the PAI and PEI. The chemical reaction has been confirmed by ATR-FTIR experiments and will be discussed later paragraphs. The mechanical strength of the membranes modified at 60°C and 70°C remained almost unchanged. However, when the post-treatment temperature increased to 80°C, the reaction might be too severe, resulting in a membrane with a very poor mechanical strength. Hence, the post-treatment temperature of 70°C was selected as an optimal condition applied for the treatment of other hollow fiber substrates.

**Table 4. Effect of Post Treatment Temperature on Membrane Properties.^{∗}**

| **Post treatment Temperature (°C)** | **Tensile strength (MPa)** | **PWP (L m⁻²h⁻¹bar⁻¹**) | **Salt rejection (%)** | |
|---|---|---|---|---|
| | | | NaCl | MgCl₂ |
| Original-ST#1 | 9.8 ± 0.5 | 26.7 ± 1.5 | 5.1 ± 0.7 | 11.9 ± 1.5 |
| 60 | 9.9 ± 0.2 | 14.6 ± 0.1 | 7.9 ± 0.7 | 46.3 ± 8.8 |
| 70 | 9.7 ± 0.2 | 1.8 ± 0.03 | 49.4 ± 3.0 | 94.4 ± 0.4 |
| 80 | N/A | N/A | N/A | N/A |

| | | | | |
|---|---|---|---|---|
| ^{∗}Post treatment condition: 1 wt.% PEI solution for 2h | | | | |

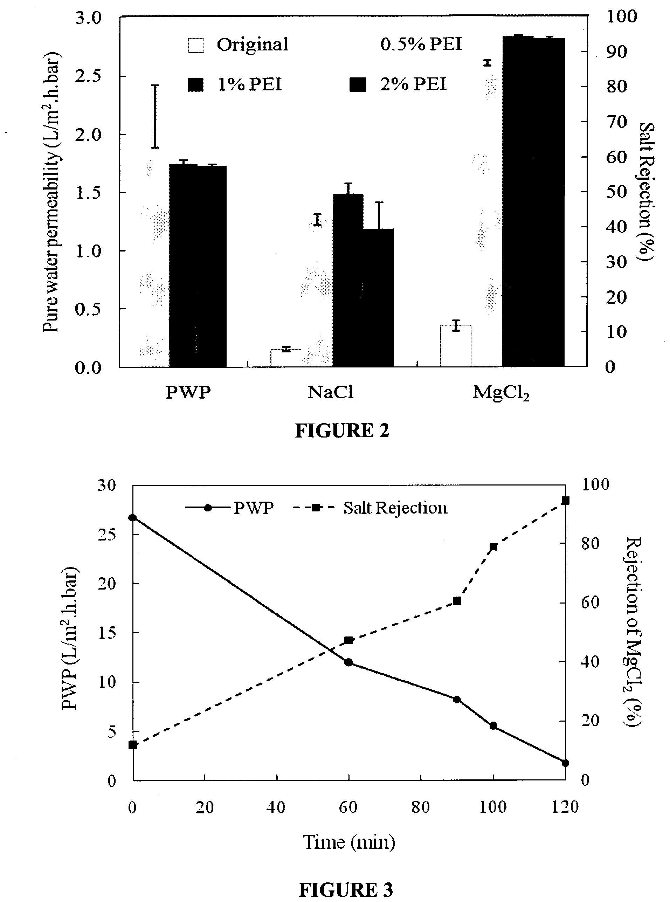

In order to determine the optimal PEI concentration, three PEI aqueous solutions of 0.5 wt%, 1 wt% and 2 wt% were prepared. As observed in **Figure 2****,** the ST#1 hollow fiber membranes modified with a 0.5 wt% PEI solution gave the lowest salt rejection to MgCl₂ and the highest PWP as compared to those modified with 1 wt% and 2 wt% PEI solutions. When 1 wt% and 2 wt% PEI solutions were used, there was no significant difference in the PWP of the modified membranes, but the membrane treated in a 1 wt% PEI solution presented the highest rejection of NaCl. Thus, the PEI solution with 1 wt% concentration was used for the post-treatment.

**Figure 3** shows the effect of post-treatment time on the filtration performance of modified ST#1 membrane using a 1 wt% PEI solution at 70°C. Obviously, a longer post-treatment time allowed more PEI molecules to crosslink with PAI, leading to an increase in the thickness of dense outer layer. Consequently, the PWP decreased and the salt rejection (Rₛ) increased. The membranes immersed in the PEI solution for 60 min showed MgCl₂ rejection of 47% and the PWP of 12 L/m².h.bar. Increasing the immersion time to 120 min enhanced the MgCl₂ rejection significantly to 94% and dropped the PWP to 1.74 L/m².h.bar.

### Characteristics of Modified PAI Hollow Fiber Membranes

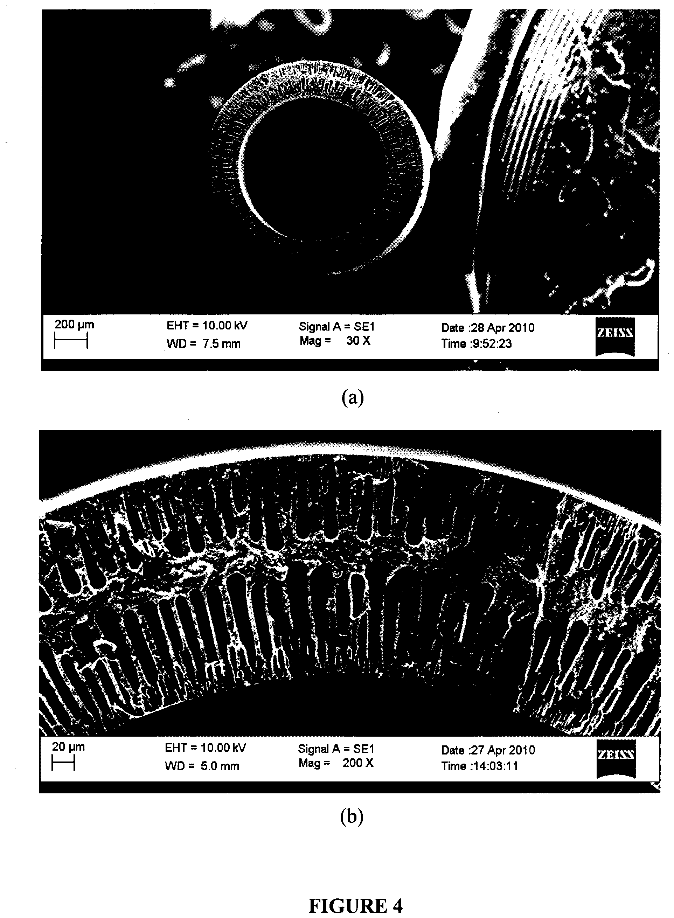

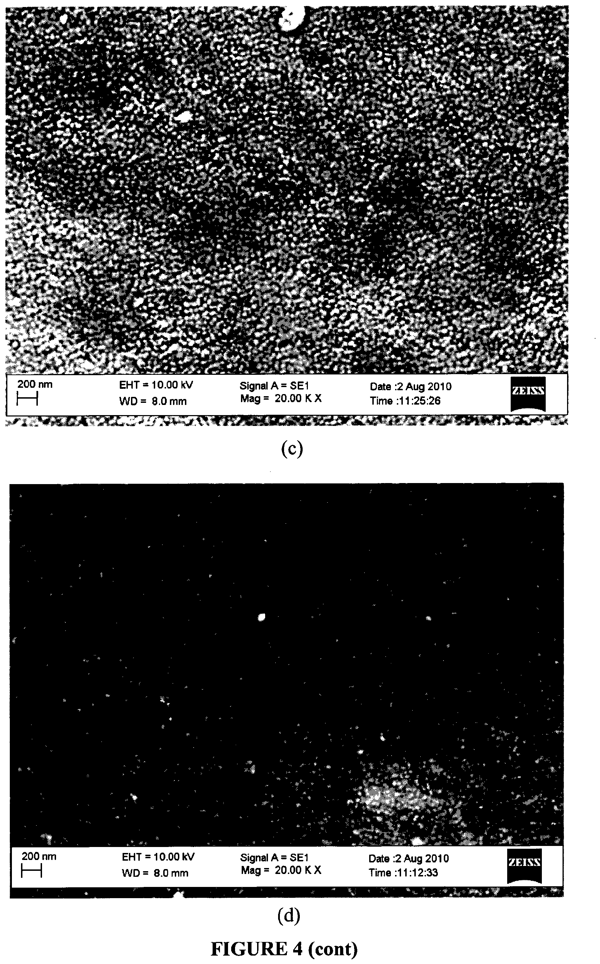

**Figure 4(a)** to **(c)** show the cross-section and outer surface morphology of ST#1 modified PAI hollow fiber. It can be seen that there is no visible difference on the cross-section morphology as compared to the original ST#1 hollow fiber substrate depicted in **Figure 1(a)(i)** and **(a)(ii)**. However, the difference in the outer surface morphology for modified and unmodified membranes can be noticed as shown in **Figure 4(c)** and **(d)**. The outer surface became denser after the post treatment.

The chemical reaction between the PAI and PEI was verified by ATR-FTIR measurements as shown in **Figure 5**. The typical imide bands can be detected at 1778 and 1717 cm⁻¹ (symmetric and asymmetric C=O stretching, respectively), 1379 cm⁻¹ (C-N-C stretching), 1109 and 725 cm⁻¹ (imide ring) for the ST#1 PAI hollow fiber substrate. It can be seen clearly that after the post-treatment, the imide peaks disappeared while amide peaks became stronger (C=O at 1641 cm⁻¹ and C-N at 1532 cm⁻¹). This confirms that the cross-linking has effectively taken place as depicted in **Figure** 6 where the imide rings were opened and a bond between the amine functional group in PEI and the imide rings in PAI has been formed.

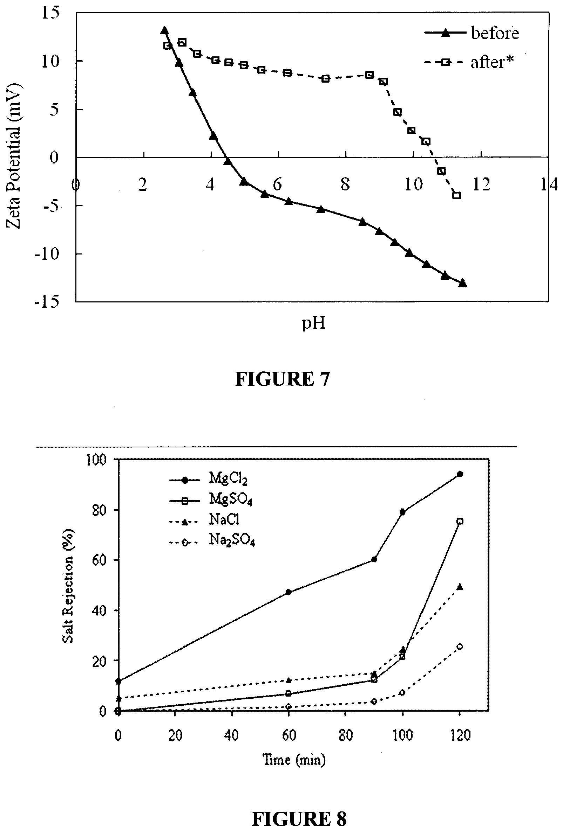

The charge characteristics of the ST#1 hollow fiber membrane before and after the post-treatment were determined in terms of zeta potential. It can be seen in **Figure 7** that the original PAI membrane had an isoelectric point of 4.4. At a pH below the isoelectric point, the membrane were positively charged due to amine protonation, while at a pH above the isoelectric point the membrane was negatively charged because of the deprotonation of the carboxyl group. However, it was noticed that after the post-treatment the isoelectric point was shifted to 10.4 due to more amine groups attached to the surface. This means that the membrane presented positive charges in a wide pH range, which could be beneficial to some applications.

The rejection behaviors of the modified ST#1 membrane to various salts are depicted in **Figure 8****.** The chemical reaction between the PAI and PEI resulted in a positively charged membrane due to amine groups attaching on the membrane surface. Thus, a high rejection of MgCl₂ is expected. It was also observed that the membrane presented a higher rejection to divalent cations than monovalent cations. The MgCl₂ rejection was the highest at all post-treatment time while Na₂SO₄ had the lowest rejection though the diffusion coefficients for those salts are comparable (MgCl₂: 1.25 × 10⁻⁹ m²/s; Na₂SO₄: 1.23 ×10⁻⁹ m²/s). These results may be attributed to the combination of several factors: (1) the contributions of the co-ion and counter-ion to the ionic strength, (2) the electric charge on the membrane, and (3) the hydrated radius of the ions. Especially, when a charged membrane was placed in an electrolyte solution, the concentration of the co-ion near the membrane surface was lower than that in the bulk solution, while the counter-ion concentration was higher near the membrane surface than in the bulk solution. Since the counter-ion valency of SO₄²⁻ is higher than that of co-ion (Na⁺) in the Na₂SO₄ solution, the positive charges of the membrane may be shielded. Therefore, the contribution from the electric interaction to the selective rejection behavior (Donnan repulsion effect) of the membrane was weakened, leading to a lower rejection to Na₂SO₄.

### PAI Hollow Fiber Membranes with a Positively Charged NF-Like Selective Layer for FO Application

The intrinsic properties of PAI hollow fiber membranes with a positively charged NF-like selective layer (hereinafter denoted as PAI FO hollow fibers) such as water permeability A and MgCl₂ rejection measured in an RO cross-flow filtration setup are tabulated in **Table 5**. It can be seen that the PAI FO hollow fibers presented a water permeability ranging from 1.74 to 2.25 L/m².h.bar which is higher than commercial Hydration Technology Innovations' (HTI) FO flat sheet membranes (HTI's FO membrane: A value of 0.8 to 1.13 L/m².h.bar). The three PAI FO hollow fibers also exhibited a high MgCl₂ rejection over 91.1% at 1 bar pressure.

**Table 5. Intrinsic Properties of Hollow Fiber Membranes of Example 1, 2, and 3**

| **Sample** | **Water permeability, A (L m⁻²h ⁻¹bar⁻¹)** | **MgCl₂ Rejection @ 1 bar, Rₛ (%)** |
|---|---|---|
| ST#1 | 1.74 | 94.4 |
| ST#2 | 2.25 | 92.7 |
| ST#3 | 2.19 | 91.1 |

The performance of three different PAI FO hollow fiber membranes in FO process was determined using a 1.5M MgCl₂ solution as the draw solution and deionized water as the feed water at 23°C, and the results are listed in **Table 6**. It was found that in the configuration of the AL-facing-DS, the ST#1, ST#2, and ST#3 PAI FO hollow fibers showed a water flux of 6.34, 17.28, and 17.15 L/m².h, respectively. The ST#2 and ST#3 PAI FO membranes presented almost three-time higher water flux as compared to the ST#1. Since the water flux in the FO process is determined by both the skin layer and the substrate structure, and the water permeability of the ST#2 and ST#3 membranes is only ∼1.3 times of the ST#1 membrane, the three-time higher water flux presented by the ST#2 and ST#3 membranes is believed to be mainly attributed to their much thinner and more porous substrate structure, as shown in **Figure 1** and **Table 2.**

**Table 6. Performance of PAI FO membranes applied in FO process.^{∗}**

| **Sample** | **AL-facing-DS** | | **AL-facing-FW** | |
|---|---|---|---|---|
| | J_{V} (L m⁻²h⁻¹) | J_{S}/J_{V} (g L⁻¹) | J_{V} (L m⁻²h⁻¹) | J_{S}/J_{V} (g L⁻¹) |
| ST#1 | 6.34 | 0.48 | 4.15 | 0.46 |
| ST#2 | 17.3 | 0.96 | 11.7 | 0.33 |
| ST#3 | 17.2 | 2.19 | 12.9 | 0.37 |

| | | | | |
|---|---|---|---|---|
| ^{∗}Draw solution: 1.5M MgCl₂ solution. | | | | |

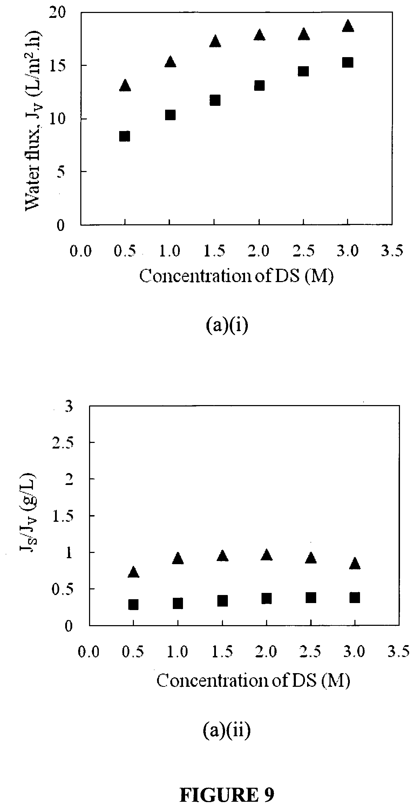

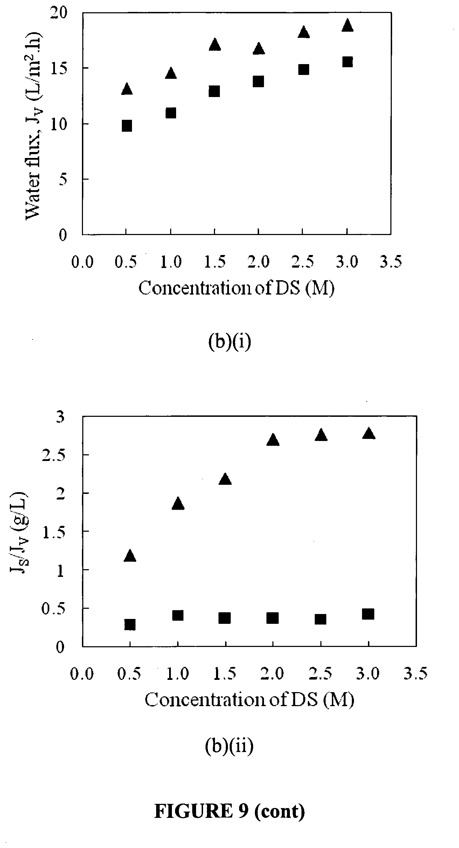

The experimental FO water flux and the ratio of salt flux over water flux (*J_{S}*/*J_{V}*) as a function of draw solute concentration are shown in **Figure 9** for the ST#2 and ST#3 PAI FO hollow fiber membranes. It was found that the two membranes exhibited similar water flux profiles. The water flux increased steadily as the concentration of the draw solution increased. For both the AL-facing-DS and AL-facing-FW configurations, the ST#2 and ST#3 PAI FO membranes presented similar performance. This result is a bit surprising, as the ultra-filtration (UF) substrates of the ST#2 and ST#3 had different MWCOs and porosities (*ε*) though the fiber wall thickness (*l)* of the two membranes is similar. The difference in the pore size of the outer surface may be mitigated by the chemical crosslink reaction. In the substrate, porosity, fiber wall thickness and tortuosity (τ) are the main parameters to affect the FO flux. Since the ST#2 substrate had bigger pores, it might have better pore interconnections, i.e., a smaller value of tortuosity as compared with the ST#3 substrate. Though the ST#2 substrate has a lower porosity than the ST#3 substrate, the structural parameters *S* = *^{τl}*/*_{ε}* of these two substrates might be similar.

The *Js*/*Jv* profiles as a function of the draw solute concentration for the ST#2 and ST#3 PAIFO hollow fiber membranes are illustrated in **Figure 9(a)(ii)** and **(b)(ii)****,** respectively. Overall, in the configuration of the AL-facing-FW, the ST#2 and ST#3 membranes show similar Js/Jv profiles. The *Js*/*Jv* of the two membranes is smaller than 0.4 g/L, which is lower than in the AL-facing-DS configuration for both membranes. This value is also lower than the data for HTI's FO membrane which is 0.85 g/L. Surprisingly, when the orientation changed, a significant difference in the *Js*/*Jv* profile occurred between the two membranes. The *Js*/*Jv* of the ST#2 PAI FO hollow fiber membrane increased slightly as the draw solute concentration increased to 2.0 M and then it maintained almost unchanged. In contrast, the *Js*/*Jv* of the ST#3 membrane was much higher than the ST#2 PAI FO hollow fiber membrane, and it raised sharply with an increase in draw solute concentration.

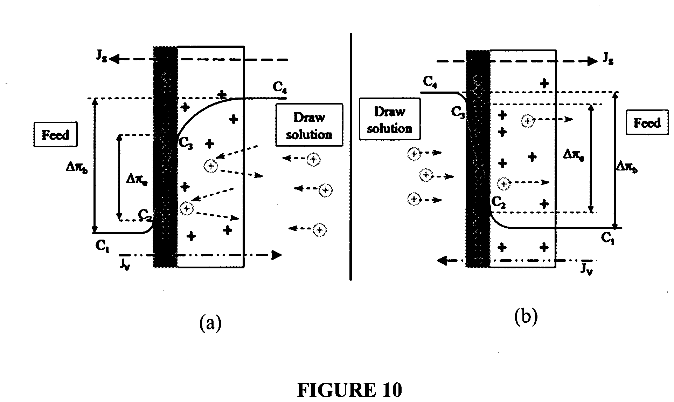

To understand this behavior, schematic concentration profiles in a positively charged membrane are depicted in **Figure 10** to illustrate the salt transportation in the FO process. The PAI FO hollow fiber membrane consists of two parts: (1) a dense active skin layer (shaded) which contains most of the charge; and (2) a porous substrate (white) which may contain less charge, as the membrane substrate was immersed in a PEI solution after both fiber ends were sealed. In the AL-facing-FW configuration **(****Figure 10(a)**), the C₁ and C₄ are the salt concentrations of the bulk feed and the draw solution, and the C₂ and C₃ are the salt concentrations at the interfaces between the feed and the membrane surface, and between the active layer and the porous substrate, respectively. The difference between the C₃ and C₄ was caused by water permeation (dilution effect) for a neutral membrane, which is so-called ICP effect. However, the C₃ in a positively charged membrane substrate may be smaller than in a neutral membrane substrate due to the Donnan exclusion that tended to expel the MgCl₂ back to the draw solution. In addition, the charges in the dense-active surface also imposed a repulsive force to the salt penetration through the membrane (salt flux and salt repulsion are in opposite directions). Thus, there were double electrical repulsions to the salt transfer in a positively charged FO membrane under the configuration of AL-facing-FW.

However, in the AL-facing-DS configuration **(****Figure 10(b)****)**, when some of the salt penetrated through the dense-active layer into the porous substrate, a salt concentration of C₂ at the interface of the active layer with the porous substrate was built up. The positive charges in the support layer tended to expel the ions to the feed side because of a less mass transfer resistance in the substrate. Thus the salt transportation through a positively charged FO membrane was facilitated in the configuration of AL-facing-DS (salt flux and salt repulsion are in the same direction). That is why the *Js*/*Jv* in the AL-facing-FW is lower than in the AL-facing-DS for both membranes.

Comparing the ST#2 PAI FO hollow fiber membrane with the ST#3 PAI FO hollow fiber membrane, the main difference lies in the substrate porosity (70% for ST#2 vs. 85% for the ST#3). In the AL-facing-DS configuration, a highly porous substrate would significantly reduce the hindrance of mass transfer, making the facilitated ion transportation imposed by the positive charges in the substrate easily realized. Thus, the *Js*/*Jv* of the ST#3 PAI FO membrane was much higher than the ST#2 PAI FO membrane, and it increased sharply with an increase in draw solute concentration.

**Table 7** lists the water flux of various membranes with a NF-like selective layer used for FO process. It seems the performance of the ST#2 and ST#3 PAI FO hollow fiber membranes in the configuration of AL-facing-FW are better than most of other NF membranes reported in literature. In addition, the ST#2 and ST#3 PAI FO hollow fiber membranes exhibited the largest fiber lumen, which is a desirable feature for liquid processes.

**Table 7. Comparison of Various Membranes Used in FO Process**

| Sample | ID/OD (mm mm⁻¹) | PWP (L m⁻²h⁻¹bar⁻¹) | R_{S} MgCl₂ (%) | FO water flux (L m⁻²h⁻¹) | DS: MgCl₂ (M) | Orientation |
|---|---|---|---|---|---|---|
| ST#2 | 1.24/1.58 | 2.25 | 92.7 | 13.1 | 0.5 | AL-facing-DS |
| | | | | 15.4 | 1.0 | |
| ST#2 | 1.24/1.58 | 2.25 | 92.7 | 8.36 | 0.5 | AL-facing-FW |
| | | | | 10.4 | 1.0 | |
| ST#3 | 1.24/1.54 | 2.19 | 91.1 | 13.2 | 0.5 | AL-facing-DS |
| | | | | 14.6 | 1.0 | |
| ST#3 | 1.24/1.54 | 2.19 | 91.1 | 9.74 | 0.5 | AL-facing-FW |
| | | | | 11.0 | 1.0 | |
| PBI^{a} | 0.14/0.27 | 0.50 | 86.0 | 9.02 | 2.0 | AL-facing-DS |
| PBI^{a} | 0.14/0.27 | 0.50 | 86.0 | 5.20 | 2.0 | AL-facing-FW |
| 4m-PBI^{b,∗} | 0.21/0.29 | 1.34 | 92.0 | 11.0 | 1.0 | AL-facing-DS |
| 4m-PBI^{b,∗} | 0.21/0.29 | 1.34 | 92.0 | 5.00 | 1.0 | AL-facing-FW |
| 9m-PBI^{b,∗} | 0.21/0.29 | 1.25 | 96.0 | 5.00 | 1.0 | AL-facing-DS |
| 9m-PBI^{b,∗} | 0.21/0.29 | 1.25 | 96.0 | 1.70 | 1.0 | AL-facing-FW |
| DL-PBI^{c,#} | 0.54/0.95 | 1.74 | 87.0 | 15.7 | 1.0 | AL-facing-DS |
| DL-PBI^{c,#} | 0.54/0.95 | 1.74 | 87.0 | 7.50 | 1.0 | AL-facing-FW |
| CA^{d} | 0.35/0.55 | 0.47 | 97.0 | 2.70 | 0.5 | AL-facing-DS |
| CA^{d} | 0.35/0.55 | 0.47 | 97.0 | 1.80 | 0.5 | AL-facing-FW |

| | | | | | | |
|---|---|---|---|---|---|---|
| ^{a}Wang et al.,, J Membrane Science, 300 (2007) 6-12 ^{b}Wang et al., Chemical Engineering Science, 64 (2009) 1577-1584 ^{c}Yang et al., Environmental Science & Technology, 43 (2009) 2800-2805 ^{d}Su et al., J Membrane Science, 355 (2010) 36-44 ^{∗}Chemically modified PBI; ^{#}Dual-layer PBI | | | | | | |

### Conclusion

In summary, based on the present method, PAI FO hollow fiber membranes having a large lumen with an inner diameter > 1mm and a wall thickness of about 0.15 to about 0.17 mm have been obtained. The hollow fiber substrate has a high porosity of about 70 to about 85%. The hollow fiber membranes also possess a high pure water permeability of about 2.19 to about 2.25 L m⁻²h⁻¹bar⁻¹ and reasonable rejections of about 49% and about 94% at 1 bar pressure for NaCl and MgCl₂, respectively. In the FO process, when using a 0.5 M MgCl₂ as a draw solution and DI water as the feed in the AL-facing-FW configuration at 23°C, the water fluxes of the ST#2 and ST#3 PAI FO hollow fiber membranes are 8.36 and 9.74 L m⁻²h⁻¹, respectively, and the *J_{S}*/*J_{V}* of the two membranes is smaller than 0.4 g L⁻¹, which is lower than the data of 0.85 g L⁻¹for HTI's FO membrane.

Different from a neutral membrane, the positively charged FO membrane provides double electric repulsions to the salt transfer through the membrane in the AL-facing-FW configuration, leading to a reduction of salt penetration, while in the AL-facing-DS configuration, the positive charges facilitate salt transportation.

The membrane structure and surface property can be carefully tailored by adjusting polymer dope composition, spinning conditions and the post-treatment parameters.

By "comprising" it is meant including, but not limited to, whatever follows the word "comprising". Thus, use of the term "comprising" indicates that the listed elements are required or mandatory, but that other elements are optional and may or may not be present.

By "consisting of" is meant including, and limited to, whatever follows the phrase "consisting of". Thus, the phrase "consisting of" indicates that the listed elements are required or mandatory, and that no other elements may be present.

By "about" in relation to a given numberical value, such as for temperature and period of time, it is meant to include numerical values within 10% of the specified value.

## Claims

1. A method for forming a nanofiltration hollow fiber membrane comprising a poly(amide-imide) (PAI) hollow fiber substrate having a lumen and a polyethyleneimine (PEI)-cross-linked PAI skin layer formed on a shell side, wherein the PAI hollow fiber substrate is made of asymmetric microporous hollow fibers made of PAI material, the method comprising
contacting the PAI hollow fiber substrate with an aqueous solution of polyethyleneimine (PEI) at a temperature of between 50°C and 80°C for a period of between 1 and 180 min to cross-link PAI in the skin layer of the PAI hollow fiber substrate by PEI after sealing both ends of the PAI hollow fiber substrate, wherein concentration of the aqueous PEI solution ranges from between 0.2 to 5 wt%.

2. The method of claim 1, comprising contacting at 70°C.

3. The method of claim 1, comprising contacting for 120 min.

4. The method of claim 1, wherein the concentration is 1 wt%.

5. A nanofiltration hollow fiber membrane obtained by the method of any one of claims 1 to 4.

## Patentansprüche

1. Ein Verfahren zum Bilden einer Nanofiltrations-Hohlfasermembran, umfassend ein Poly(amidimid) (PAI)-Hohlfasersubstrat, das ein Lumen und eine auf einer Schalenseite gebildete Polyethylenimin (PEI)-vernetzte PAI-Hautschicht aufweist, wobei das PAI-Hohlfasersubstrat aus asymmetrischen, mikroporösen Hohlfasern aus PAI-Material hergestellt wird, wobei das Verfahren umfasst
das Kontaktieren des PAI-Hohlfasersubstrats mit einer wässrigen Lösung aus Polyethylenimin (PEI) bei einer Temperatur zwischen 50 °C und 80 °C für einen Zeitraum zwischen 1 und 180 min, um das PAI in der Hautschicht des PAI-Hohlfasersubstrats nach dem Verschließen beider Enden des PAI-Hohlfasersubstrats durch PEI zu vernetzen, wobei die Konzentration der wässrigen PEI-Lösung zwischen 0,2 bis 5 Gew.-% liegt.

2. Das Verfahren gemäß Anspruch 1, umfassend das Kontaktieren bei 70 °C.

3. Das Verfahren gemäß Anspruch 1, umfassend das Kontaktieren bei 120 °C.

4. Das Verfahren gemäß Anspruch 1, wobei die Konzentration 1 Gew.-% beträgt.

5. Eine Nanofiltrations-Hohlfasermembran, erhalten durch das Verfahren gemäß einem der Ansprüche 1 bis 4.

## Revendications

1. Procédé de formation d'une membrane à fibres creuses de nanofiltration comprenant un substrat en fibres creuses de poly(amide-imide) (PAI) ayant une lumière et une couche de peau en PAI réticulé par la polyéthylèneimine (PEI) formée sur un côté de l'enveloppe, dans lequel le substrat en fibres creuses de PAI est constitué de fibres creuses microporeuses asymétriques constituées de matériau PAI, le procédé comprenant
la mise en contact du substrat en fibres creuses de PAI avec une solution aqueuse de polyéthylèneimine (PEI) à une température comprise entre 50°C et 80°C pendant une période comprise entre 1 et 180 minutes pour réticuler le PAI dans la couche de peau du substrat en fibres creuses de PAI par la PEI après avoir scellé les deux extrémités du substrat en fibres creuses de PAI, dans lequel la concentration de la solution aqueuse de PEI est comprise entre 0,2 et 5 % en poids.

2. Procédé selon la revendication 1, comprenant la mise en contact à 70°C.

3. Procédé selon la revendication 1, comprenant la mise en contact pendant 120 minutes.

4. Procédé selon la revendication 1, dans lequel la concentration est 1 % en poids.

5. Membrane à fibres creuses de nanofiltration obtenue par le procédé selon l'une quelconque des revendications 1 à 4.
